# EUROPEAN PATENT SPECIFICATION

(11) **EP 2 075 159 B1**
(45) Date of publication and mention of the grant of the patent: **15.09.2010**
(21) Application number: 07425832.8
(22) Date of filing: 28.12.2007
(51) Int. Cl.: B60R 1/00, H04N 5/445, H04N 7/18, G02B 27/10

(54) **Optical device for superimposing images**
Optische Einrichtung zum Überlagern von Bildern
Dispositif optique de superposition d'images

(43) Date of publication of application: 01.07.2009
(73) Proprietor: Magneti Marelli S.p.A., 20011 Corbetta (MI) (IT)
(72) Inventor: Ghisio, Guido, 10078 Venaria (Torino) (IT); Monchiero, Gianluca, 10078 Venaria (Torino) (IT)
(74) Representative: Deambrogi, Edgardo

(56) References cited:
- WO-A-01/25054
- DE-A1-102004 039 334
- GB-A- 2 223 464
- US-A- 4 876 594
- US-A1- 2002 071 102

## Description

The present invention relates to the representation of images, and more specifically to the representation of images on a display device on board a vehicle.

US 4 876 594 discloses an apparatus for maintaining the vigilance of a driver and comprising a head-up display capable of presenting to the eyes of a driver viewing ahead through the vehicle's windshield visual images projected from a video display source within the vehicle. This result is accomplished by using a dichroic mirror in a region of the windshield so as to allow light striking the region from within the vehicle to be reflected towards the driver's eyes, while still transmitting to the driver's eyes the light rays which carry the information constituting the scene ahead of the vehicle.

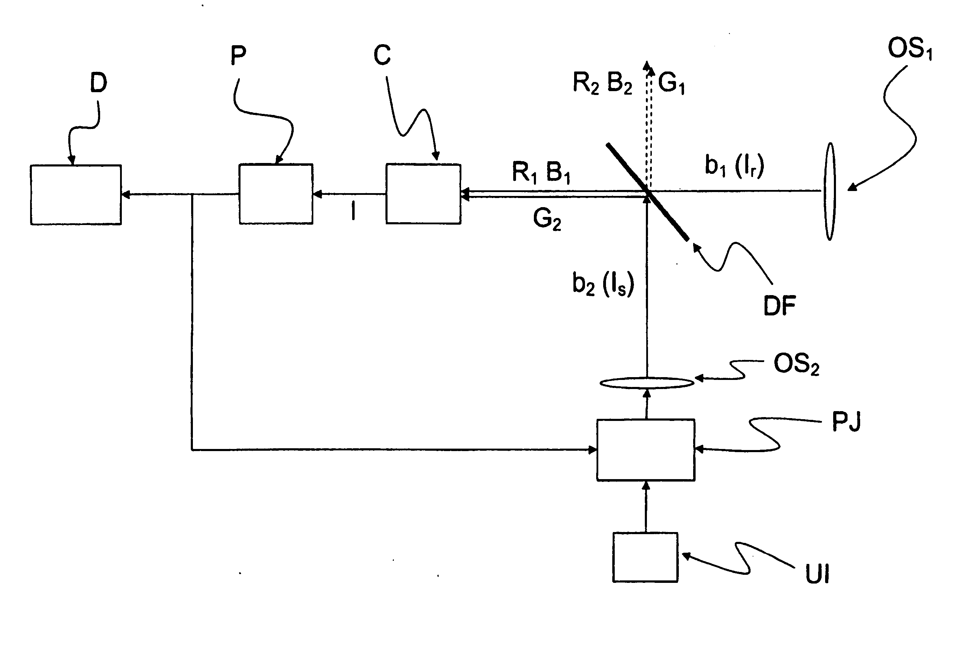

It is known how to represent, on a display device, a real image of an environment or a-scene shot by a video camera or similar shooting device, artificially superimposing on it a synthetic image of a reference system, for example a reference grid, or a prerecorded image, for example a scenario for reference or comparison, a pictogram, signalling or similar, see e.g. generic WO 01/25054 A1, figures 3 to 5.

Images are superimposed directly by an electronic processing and control unit able to receive digital data of the image from the external shooting device. In the case of an electronic processing and control unit of an onboard display device for a vehicle, the synthetic reference images are pre-existent and stored in an unmodifiable way in the device, and the control unit selects the image to be superimposed on the real image based on predefined criteria, dependent on the onboard equipment (for example, navigator device) which uses the display and governs the representation.

Generally, the onboard display device is used to represent images supporting various onboard items of equipment (navigator device, video cameras shooting the environment surrounding the vehicle, information and entertainment devices) and in the case of representing images from a shooting device, it is not possible to modify their behaviour as a function of the optical shooting system, which the manufacturer of the vehicle often acquires from a different supplier.

For this reason, it is not possible to have true integration between the two devices, which nevertheless form a single chain for processing the image, and therefore it is not easy to calibrate the superimposition of a desired synthetic image on a real image allowing only the possibility to adjust the parameters of the shooting device.

The object of the present invention is to provide a solution for representing superimposed real and synthetic images, avoiding the drawbacks of the prior art. According to the present invention such an aim is achieved by virtue of an arrangement for superimposing images, which has the features claimed in Claim 1.

Particular embodiments form the subject of the dependent claims.

In summary, the present invention is based on the principle of acquiring, by means of an available shooting device, both the real and synthetic images, and hence the images are superimposed in the analogue domain by the same shooting device, and a composite image is forwarded to the processing unit of the display device without an operation for the digital superimposition of images being required at the display device.

The synthetic image supplied to the shooting device is generated by associated image projector means, and the superimposition takes place through image composition means based on the principle of the composition of images in complementary spectral regions. Images in complementary spectral regions are extracted by subjecting the optical beams of the image to filtering in order to separate out the fundamental chromatic components.

Further advantages and features of the present invention will become clear from the following detailed description which is given with reference to the appended drawing which is provided purely by way of non-limiting example and which shows an arrangement for superimposing and representing images according to the invention.

The label C indicates a shooting device, for example a shooting device for the environment surrounding a vehicle, such as a video camera or similar device operating at visible wavelengths, arranged on board the vehicle and adapted to acquire an image of an area in front of or behind the vehicle. The shooting device is connected to a processing unit P, preferably in the form of a digital signal processor, to which it supplies image signals I, for example signals representing a scene of the environment outside the vehicle. Downstream of the processing unit, an onboard display device D is arranged to receive the image digital data processed by the unit P and to present an image to the driver.

Upstream of the shooting device C, in the optical shooting path, a dichroic filter DF is inserted and oriented at an inclination of 45° with respect to a pair of incident optical beams b₁ and b₂, from, respectively, a first optical system OS₁ forming a real image Iᵣ of an environmental scene and a second optical system OS₂ forming a synthetic image Iₛ projected by an image generator/projector device PJ.

The image generator/projector device can be, for example, a device projecting a grid by the diffraction of coloured light on "striped" glass or a projector of drawings via the transmission of pictograms, that are generated on displays or equivalent devices, through lenses.

The environmental scene is, for example, a scenario shot in front of or behind the vehicle. The synthetic image can be a reference system, for example a reference grid, a pictogram or a complex scenario.

The dichroic filter DF is adapted to transmit two of the three fundamental chromatic components of an image beam (for example, the blue and red components), and reflect (filter) the complementary component (in the example, the green component).

The arrangement represented in the drawing therefore provides for two of the three fundamental chromatic components of the beam b₁ (R₁, B₁) and the complementary chromatic component of the beam b₂ (G₂) to impinge upon the shooting device C, as a result of which the shooting device acquires a composite image I as a superimposition of the images Iᵣ and Iₛ propagated by the beams b₁ and b₂.

The image generator/projector device PJ is connected, in a feedback path, to the processing unit P, in order to automatically adjust image parameters based on the processing of the composite image I.

Alternatively, means, indicated as a whole by UI, for interfacing with a user, are connected to the image generator/projector device PJ in order to adjust image parameters.

Advantageously, the arrangement according to the invention provides for representing on the display device D a composite image I formed by a part-colour contribution of a real image Iᵣ, for example of an environmental scene, and a part-colour contribution, using complementary colours, of a superimposed synthetic image Iₛ, adapted to convey auxiliary information such as a reference system, signalling by means of pictograms or a complex scenario, for example to superimpose, on an articulated image of roads or roundabouts, pictograms indicating directions and diversions (referred to as "enhanced reality").

In the preferred example application to artificial vision systems on board vehicles to aid driving, the real image of the environmental scene is an image representing an environment outside the vehicle, for example the scenario ahead in the direction of travel of the vehicle, and the synthetic image is an image of a reference grid, superimposed on the real image to form an aid and reference, for example, for a parking operation, or of a pictogram signalling dangerous driving conditions or repeating the indication of a road sign recognized by the vision system of the vehicle.

The interface means Ul include, for example, control rings or buttons for adjusting the dimensional characteristics of the grid matrix of a reference system (width and height of the meshes) or via commands to the image generator/projector device.

The image generator/projector device is arranged to modify the dimensions of a synthetic image or to select one of a plurality of synthetic images when the image is being generated.

Thus, a reference grid can easily be modified by the user, or automatically according to vehicle travel parameters affecting the scale of representation, such as the steering angle, in order to adjust the aforementioned scale.

In a simplified embodiment, a reference grid can be serigraphed on an element (a lens) of the optical system associated with the image projector device, and thus the image generator/projector device is arranged to modify the dimensions of the generated image by controlling the associated optical system.

The modification of the dimensions (scale) of a grid or similar reference system, or of other images, is advantageous in order to calibrate the synthetic image Iₛ superimposed on the real image Iᵣ with respect to the dimensions of one or more reference objects present in the real image. For example, the image of a pedestrian in a rear-view system provides for calibrating a superimposed reference grid with respect to standard anthropometric characteristics, such that the meshes of the grid are indicative of a predetermined metric value.

Advantageously, in the case of driving aid systems, the purpose of which is to help the driver of a vehicle detect obstacles, chromatic consistency in the representation of the composite image is not necessary, and therefore the real image can be displayed in greyscale in order that the absence of the contribution of a colour component is not made perceptible, while the synthetic image can be represented in a highlighting colour, in order to draw the attention of the driver of the vehicle, and in general, of the observer of the display device.

Naturally, the principle of the invention remaining the same, the forms of embodiment and details of construction may be varied widely with respect to those described and illustrated purely by way of non-limiting example, without thereby departing from the scope of protection of the present invention, which scope of protection is defined by the appended claims.

## Claims

1. An arrangement for superimposing images, particularly for representing images on an onboard display device for a vehicle, comprising
- means (C) for shooting an environmental scene, operating at visible wavelengths and adapted to acquire a real image (Iᵣ) representative of the scene through the incidence of a first optical beam (b₁) propagated along a first path,
- means for projecting or generating and projecting a synthetic image (Iₛ) in a vehicle, and
- display means (D) for presenting to an observer a composite image (I) as the superimposition of a real image (Iᵣ) and of the synthetic image (Iₛ),
**characterised in that** the arrangement further comprises:
the means (PJ) for projecting or generating and projecting a synthetic image (Iₛ) being arranged upstream of the shooting means (C) and being adapted to form a second optical beam (b₂) propagated along a second path; and
- filter means (DF) adapted to separate the fundamental chromatic components of the first and second optical beams (b₁, b₂), which means (DF) are inserted in the paths of the first and second optical beams (b₁, b₂) and are adapted to convey onto a common optical path, incident upon the shooting means (C), the real image (Iᵣ) and the synthetic image (Iₛ) in respectively complementary chromatic components.

2. An arrangement according to Claim 1, in which the filter means (DF) include a dichroic filter oriented in such a way as to receive, as incident beams, the first and second optical beams (b₁, b₂) and adapted to transmit/reflect towards the shooting means (C) two of the three fundamental chromatic components of the first optical beam (b₁) and the residual complementary component of the second optical beam (b₂).

3. An arrangement according to either Claim 1 or 2, including a first optical system (OS₁) for forming the real image (Iᵣ), which is inserted in the path of the first optical beam (b₁).

4. An arrangement according to Claim 1, 2 or 3, including a second optical system (OS₂) for forming the synthetic image (Iₛ), which is inserted in the path of the second optical beam (b₂).

5. An arrangement according to any one of the preceding claims, in which the means (PJ) for projecting or generating and projecting the synthetic image are arranged to modify the dimensions of the synthetic image (Iₛ).

6. An arrangement according to any one of the preceding claims, in which the means (PJ) for projecting or generating and projecting the synthetic image are arranged to select one of a plurality of determined synthetic images (Iₛ).

7. An arrangement according to Claim 5, in which the means (PJ) for projecting or generating and projecting the synthetic image are arranged to modify the dimensions of the synthetic image (Iₛ) automatically based on the composite image (I).

8. An arrangement according to Claim 5, in which the means (PJ) for projecting or generating and projecting the synthetic image are arranged to modify the dimensions of the synthetic image (Iₛ) based on instructions issued by a user via associated interface means (UI).

9. An arrangement according to Claim 7 or 8, in which the means (PJ) for projecting or generating and projecting the synthetic image are arranged to modify the dimensions of the synthetic image (Iₛ) in order to calibrate the synthetic image (Iₛ) with respect to the dimensions of one or more reference objects present in the real image (Iᵣ).

10. An arrangement according to any one of the preceding claims, in which the means (PJ) for projecting or generating and projecting the synthetic image are adapted to generate
a uniform illuminating beam incident upon an image bearing optical system (OS₂) inserted in the associated optical path.

11. An arrangement according to any one of the preceding claims, in which the synthetic image (Iₛ) includes the representation of a grid reference system.

12. An arrangement according to any one of Claims 1 to 10, in which the synthetic image (Iₛ) includes the representation of a pictogram.

13. An arrangement according to Claim 12, in which the pictogram comprises a signalling of dangerous driving conditions or a representation of a road sign recognized by a vision system of the vehicle.

14. An arrangement according to any one of Claims 1 to 10, in which the synthetic image (Iₛ) includes the representation of a scenario.

15. An arrangement according to any one of the preceding claims, in which the display means (D) are arranged to represent the real image (Iᵣ) in greyscale and the synthetic image (Iₛ) in colour, in order to draw the attention of the observer.

16. An arrangement according to any one of the preceding claims, in which the shooting means (C) are adapted to shoot an image of an area in front of or behind the vehicle, and the means (PJ) for projecting or generating and projecting a synthetic image are adapted to form an image of a reference grid, the scale of which can be calibrated with respect to predetermined anthropometric characteristics, if the image of a pedestrian is present in the real image (Iᵣ) of a rear-view system.

## Patentansprüche

1. Eine Anordnung zum Überlagern von Bildern, insbesondere zum Darstellen von Bildern auf einem Bordanzeigegerät für ein Fahrzeug, aufweisend:
- Einrichtung (C) zum Aufnehmen einer Szene in der Umgebung, die bei sichtbaren Wellenlängen arbeitet und angepasst ist, ein reales Bild (Iᵣ), das die Szene darstellt, durch das Einfallen eines ersten optischen Strahls (b₁), der sich entlang einem ersten Pfad ausbreitet, zu erfassen,
- Einrichtung zum Projizieren oder Erzeugen und Projizieren eines synthetischen Bildes (Iₛ) in einem Fahrzeug, und
- Anzeigeeinrichtung (D), um einem Beobachter ein Verbundbild (I) als Überlagerung des realen Bildes (Iᵣ) und des synthetischen Bildes (Iₛ) zu präsentieren,
- **dadurch gekennzeichnet, dass** die Anordnung ferner aufweist:
die Einrichtung (PJ) zum Projizieren oder Erzeugen und Projizieren eines synthetischen Bildes (Iₛ), die der Aufnahmeeinrichtung (C) vorgeschaltet ist und
angepasst ist, einen zweiten optischen Strahl (b₂) zu bilden, der sich entlang einem zweiten Pfad ausbreitet; und
- eine Filtereinrichtung (DF), die angepasst ist, die Grundfarbenkomponenten des ersten und des zweiten optischen Strahls (b₁, b₂) zu trennen, wobei diese Einrichtung (DF) in die Pfade des ersten und des zweiten optischen Strahls (b₁, b₂) eingekoppelt und angepasst ist, das reale Bild (Iᵣ) und das synthetische Bild (Iₛ) in entsprechenden Komplementärfarbenkomponenten auf einen gemeinsamen optischen Pfad zu bringen, der auf die Aufnahmeeinrichtung (C) fällt.

2. Anordnung gemäß Anspruch 1, bei der die Filtereinrichtung (DF) ein dichroitisches Filter besitzt, das so ausgerichtet ist, dass es den ersten und den zweiten optischen Strahl (b₁, b₂) als einfallende Strahlen empfängt, und angepasst ist, zwei der drei Grundfarbenkomponenten des ersten optischen Strahls (b₁) und die übrige Komplementärkomponente des zweiten optischen Strahls (b₂) in Richtung der Aufnahmeneinrichtung (C) zu senden/reflektieren.

3. Anordnung entweder gemäß Anspruch 1 oder 2, mit einem ersten optischen System (OS₁) zum Erstellen des realen Bildes (Iᵣ), das in den Pfad des ersten optischen Strahls (b₁) eingekoppelt ist.

4. Anordnung gemäß Anspruch 1, 2 oder 3, mit einem zweiten optischen System (OS₂) zum Erstellen des synthetischen Bildes (Iₛ), das in den Pfad des zweiten optischen Strahls (b₂) eingekoppelt ist.

5. Anordnung gemäß irgendeinem der vorangegangenen Ansprüche, bei der die Einrichtung (PJ) zum Projizieren oder Erzeugen und Projizieren des synthetischen Bildes so angeordnet ist, dass sie die Abmessungen des synthetischen Bildes (Iₛ) ändert.

6. Anordnung gemäß irgendeinem der vorangegangenen Ansprüche, bei der die Einrichtung (PJ) zum Projizieren oder Erzeugen und Projizieren des synthetischen Bildes so angeordnet ist, dass sie eines aus einer Vielzahl bestimmter synthetischer Bilder (Iₛ) auswählt.

7. Anordnung gemäß Anspruch 5, bei der die Einrichtung (PJ) zum Projizieren oder Erzeugen und Projizieren des synthetischen Bildes so angeordnet ist, dass sie die Abmessungen des synthetischen Bildes (Iₛ) automatisch auf der Basis des Verbundbildes (I) ändert.

8. Anordnung gemäß Anspruch 5, bei der die Einrichtung (PJ) zum Projizieren oder Erzeugen und Projizieren des synthetischen Bildes so angeordnet ist, dass sie die Abmessungen des synthetischen Bildes (Iₛ) auf der Basis von Anweisungen ändert, die von einem Anwender über eine zugehörige Schnittstelleneinrichtung (UI) erteilt werden.

9. Anordnung gemäß Anspruch 7 oder 8, bei der die Einrichtung (PJ) zum Projizieren oder Erzeugen und Projizieren des synthetischen Bildes so angeordnet ist, dass sie die Abmessungen des synthetischen Bildes (Iₛ) ändert, um das synthetische Bild (Iₛ) in Bezug auf die Abmessungen eines oder mehr Bezugsobjekte, die im realen Bild (Iᵣ) vorhanden sind, zu kalibrieren.

10. Anordnung gemäß irgendeinem der vorangegangenen Ansprüche, bei dem die Einrichtung (PJ) zum Projizieren oder Erzeugen und Projizieren des synthetischen Bildes angepasst ist, einen gleichförmigen Leuchtstrahl zu erzeugen, der auf ein in den zugehörigen optischen Pfad eingekoppeltes, bildtragendes optisches System (OS₂) fällt.

11. Anordnung gemäß irgendeinem der vorangegangenen Ansprüche, bei der das synthetische Bild (Iₛ) die Darstellung eines Rasterbezugssystems enthält.

12. Anordnung gemäß irgendeinem der Ansprüche 1 bis 10, bei der das synthetische Bild (Iₛ) die Darstellung eines Piktogramms enthält.

13. Anordnung gemäß Anspruch 12, bei der das Piktogramm eine Signalisierung gefähirlicher Fahrbedingungen oder eine Darstellung eines Verkehrszeichens, das von einem Sichtsystem des Fahrzeugs erkannt wird, aufweist.

14. Anordnung gemäß irgendeinem der Ansprüche 1 bis 10, bei der das synthetische Bild (Iₛ) die Darstellung eines Szenarios enthält.

15. Anordnung gemäß irgendeinem der vorangegangenen Ansprüche, bei der die Anzeigeeinrichtung (D) so angeordnet ist, dass sie das reale Bild (Iᵣ) in Graustufen und das synthetische Bild (Iₛ) in Farbe darstellt, um die Aufmerksamkeit des Beobachters auf sich zu ziehen.

16. Anordnung gemäß irgendeinem der vorangegangenen Ansprüche, bei der die Aufnahmeeinrichtung (C) angepasst ist, ein Bild eines Bereichs vor oder hinter dem Fahrzeug aufzunehmen, und die Einrichtung (PJ) zum Projizieren oder Erzeugen und Projizieren eines synthetischen Bildes angepasst ist, ein Bild eines Bezugsrasters zu erstellen, dessen Skala in Bezug auf zuvor bestimmte anthiropometrische Charakteristika kalibriert werden kann, falls sich das Bild eines Fußgängers im realen Bild (Iᵣ) eines Rückwärtssichtsystems befindet.

## Revendications

1. Arrangement pour la superposition d'images, en particulier pour représenter des images sur un dispositif d'affichage embarqué pour un véhicule, comprenant
- des moyens (C) pour la prise de vues d'une scène de l'environnement, opérant à des longueurs d'onde visibles et adaptés pour acquérir une image réelle (Iᵣ) représentative de la scène par le biais de l'incidence d'un premier rayon optique (b₁) propagé le long d'un premier trajet,
- des moyens pour projeter ou pour générer et projeter une image de synthèse (Iₛ) dans un véhicule et
- des moyens d'affichage (D) pour présenter à un observateur une image composite (I) sous la forme d'une superposition de l'image réelle (Iᵣ) et de l'image de synthèse (Iₛ),
**caractérisé en ce que** l'arrangement comprend en outre:
- les moyens (PJ) pour projeter ou pour générer et projeter une image de synthèse (Iₛ), disposés en amont des moyens de prise de vues (C) et étant adaptés pour former un deuxième rayon optique (b₂) propagé le long d'un deuxième trajet; et
- des moyens de filtrage (DF) adaptés pour séparer les composants chromatiques fondamentaux du premier et du deuxième rayons optiques (b₁, b₂), lesquels moyens (DF) sont insérés dans les trajets des premier et deuxième rayons optiques (b₁, b₂) et sont adaptés pour transmettre sur un trajet optique commun, incident sur les moyens de prise de vues (C), l'image réelle (Iᵣ) et l'image de synthèse (Iₛ) dans des composants chromatiques respectivement complémentaires.

2. Arrangement selon la revendication 1, dans lequel les moyens de filtrage (DF) comprennent un filtre dichroïque orienté de manière à recevoir, à titre de rayons incidents, les premier et deuxième rayons optiques (b₁, b₂) et adapté pour transmettre/réfléchir en direction des moyens de prise de vue (C) deux des trois composants chromatiques fondamentaux du premier rayon optique (b₁) et le composant complémentaire résiduel du deuxième rayon optique (b₂).

3. Arrangement selon l'une des revendications 1 ou 2, comprenant un premier système optique (OS₁) pour former l'image réelle (Iᵣ), qui est insérée dans le trajet du premier rayon optique (b₁).

4. Arrangement selon la revendication 1, 2 ou 3, comprenant un deuxième système optique (OS₂) pour former l'image de synthèse (Iₛ), qui est insérée dans le trajet du deuxième rayon optique (b₂).

5. Arrangement selon l'une quelconque des revendications précédentes, dans lequel les moyens (PJ) pour projeter ou pour générer et projeter l'image de synthèse sont agencés pour modifier les dimensions de l'image de synthèse (Iₛ).

6. Arrangement selon l'une quelconque des revendications précédentes, dans lequel les moyens (PJ) pour projeter ou pour générer et projeter l'image de synthèse sont agencés pour sélectionner une parmi une pluralité d'images de synthèse déterminées (Iₛ).

7. Arrangement selon la revendication 5, dans lequel les moyens (PJ) pour projeter ou pour générer et projeter l'image de synthèse sont agencés pour modifier les dimensions de l'image de synthèse (Iₛ), automatiquement sur la base de l'image composite (I).

8. Arrangement selon la revendication 5, dans lequel les moyens (PJ) pour projeter ou pour générer et projeter l'image de synthèse sont agencés pour modifier les dimensions de l'image de synthèse (Iₛ), sur la base d'instructions émises par un utilisateur via des moyens d'interface associés (UI).

9. Arrangement selon la revendication 7 ou 8, dans lequel les moyens (PJ) pour projeter ou pour générer et projeter l'image de synthèse sont agencés pour modifier les dimensions de l'image de synthèse (Iₛ) afin de calibrer l'image de synthèse (Iₛ) par rapport aux dimensions d'un ou plusieurs objets de référence présents dans l'image réelle (Iᵣ).

10. Arrangement selon l'une quelconque des revendications précédentes, dans lequel les moyens (PJ) pour projeter ou pour générer et projeter l'image de synthèse sont adaptés pour générer un rayon incident d'éclairage uniforme sur un système optique porteur d'image (OS₂) inséré dans le trajet optique associé.

11. Arrangement selon l'une quelconque des revendications précédentes, dans lequel l'image de synthèse (Iₛ) comprend la représentation d'un système de grille de référence.

12. Arrangement selon l'une quelconque des revendications 1 à 10, dans lequel l'image de synthèse (Iₛ) comprend la représentation d'un pictogramme.

13. Arrangement selon la revendication 12, dans lequel le pictogramme comprend un signalement de conditions de conduite dangereuse ou une représentation d'un signal routier reconnu par un système de vision du véhicule.

14. Arrangement selon l'une quelconque des revendications 1 à 10, dans lequel l'image de synthèse (Iₛ) comprend la représentation d'un scénario.

15. Arrangement selon l'une quelconque des revendications précédentes, dans lequel les moyens d'affichage (D) sont agencés pour représenter l'image réelle (Iᵣ) sur une échelle de gris et l'image de synthèse (Iₛ) en couleurs, afin d'attirer l'attention de l'observateur.

16. Arrangement selon l'une quelconque des revendications précédentes, dans lequel les moyens de prise de vue (C) sont adaptés pour prendre une image d'une zone en avant ou en arrière du véhicule, et les moyens (PJ) pour projeter ou pour générer et projeter une image de synthèse sont adaptés pour former une image d'une grille de référence, dont l'échelle peut être calibrée par rapport à des caractéristiques anthropométriques prédéterminées, si l'image d'un piéton se présente dans l'image réelle (Iᵣ) d'un système de rétrovision.
